Europäisches Patentamt

European Patent Office

Office européen des brevets

(19)

(11) Veröffentlichungsnummer: **0 290 520 B1**

(12) **EUROPÄISCHE PATENTSCHRIFT**

(45) Veröffentlichungstag der Patentschrift:
30.10.91 Patentblatt 91/44

(51) Int. Cl.$^5$: **B23B 51/02**

(21) Anmeldenummer: **87907406.0**

(22) Anmeldetag: **24.11.87**

(86) Internationale Anmeldenummer:
**PCT/CH87/00155**

(87) Internationale Veröffentlichungsnummer:
**WO 88/03849 02.06.88 Gazette 88/12**

(54) **SPIRALBOHRER.**

(30) Priorität: **25.11.86 CH 4703/86**

(43) Veröffentlichungstag der Anmeldung:
**17.11.88 Patentblatt 88/46**

(45) Bekanntmachung des Hinweises auf die
Patenterteilung:
**30.10.91 Patentblatt 91/44**

(84) Benannte Vertragsstaaten:
**DE GB IT**

(56) Entgegenhaltungen:
**DE-A- 2 016 364
DE-C- 576 265
FR-A- 764 041
FR-A- 2 193 673
GB-A- 147 631
US-A- 2 370 706**

(73) Patentinhaber: **SPHINXWERKE MÜLLER AG**
**Werkhofstrasse 33**
**CH-4502 Solothurn (CH)**

(72) Erfinder: **FRIEDLI, Paul**
**Känzeliweg 12**
**CH-4522 Rüttenen (CH)**
Erfinder: **PETIGNAT, Georges**
**Rue de Courgenay 21**
**CH-2942 Alle (CH)**
Erfinder: **SALOMON, Jean-Marc**
**La Rochette 33b**
**CH-2900 Porrentruy (CH)**

(74) Vertreter: **EGLI-EUROPEAN PATENT**
**ATTORNEYS**
**Horneggstrasse 4**
**CH-8008 Zürich (CH)**

# Beschreibung

Die Erfindung bezieht sich auf einen zweischneidig ausgebildeten Spiralbohrer, welcher zwei diametral zueinander angeordnete und durch einen Bohrerkern voneinander getrennte Span-Nuten sowie zwei mit dem Bohrerkern in Umfangsrichtung im Abstand zueinander angeordnete Schneiden und mindestes eine entsprechend angeordnete Führungsfase aufweist, wobei der Bohrerkern in bezug zu der als Querschneide ausgebildeten Bohrerspitze in einen mit der ersten Schneide und einer ersten Führungsfase versehenen ersten Bohrersteg sowie in einen mit der zweiten Schneide versehenen zweiten Bohrersteg unterteilt ist.

Aus der DE-A 2 016 364 ist ein Spiralbohrer bekannt, welcher in bezug zu einem symmetrisch ausgebildeten Bohrerkern zwei diametral zueinander angeordnete und durch den Bohrerkern voneinander getrennte Span-Nuten sowie in Dreh- und Umfangsrichtung im Abstand zueinander angeordnete Führungsfasen und Schneidflächen aufweist. Die symmetrische Anordnung und Ausbildung der Span-Nuten bewirkt bei diesem Spiralbohrer einen unruhigen Bohrvorgang, wodurch eine unerwünschte, unregelmässige Fläche der Bohrungswand entsteht. Zudem besteht die Möglichkeit, dass beim Bohren bestimmter Werkstoffe der Abtransport der Späne nicht ausreichend ist, wodurch ein Verstopfen der Span-Nuten entsteht.

Der Erfindung liegt die Aufgabe zugrunde, für einen mit zwei Schneiden sowie mit zwei Span-Nuten versehenen Spiralbohrer eine weitere Lösung anzugeben, mittels welcher beim Bohren eine optimale Laufruhe und somit eine glatte Bohrungswand erreichbar ist.

Diese Aufgabe wird erfindungsgemäss dadurch gelöst, dass der zweite Bohrersteg in bezug zu dem ersten Bohrersteg im Querschnitt verstärkt ausgebildet und mit zwei im Abstand zueinander angeordnete Führungsfasen versehen ist, dass die beiden Bohrerstege derart am Umfang versetzt zueinander angeordnet sind, dass der in Drehrichtung zwischen der ersten Schneide und der zweiten Schneide vorgesehene erste Teilungswinkel grösser als der ergänzende und zwischen 110° und 175° liegende zweite Teilungswinkel ausgebildet ist.

Die Erfindung wird nachstehend unter Bezugnahme auf die einzige, einen Spiralbohrer in Draufsicht zeigende Figur beschrieben.

Der Spiralbohrer hat zwei mit entsprechend angeordneten Hauptschneiden 3 und 4 sowie Führungsfasen 5 und 6 versehene Bohrerstege 1 und 2 mit entsprechend angeordneter Querschneide 8. An dem einen Bohrersteg 1 ist eine Führungsfase 5 und an dem anderen Bohrersteg 2 eine erste Führungsfase 6 und entgegen der Drehrichtung D im Abstand dazu eine zweite Führungsfase 11 vorgesehen. Zwischen den beiden Führungsfasen 6 und 11 des Bohrerstegs ist eine Freifläche 10 angeordnet.

Die beiden Schneiden 3 und 4 sind in Umfangsrichtung durch Span-Nuten 7,7' mit ungleicher und mit α und β bezeichneten Winkelteilung zueinander angeordnet, wobei der eine Teilungswinkel α 110° bis 175° und der andere Teilungswinkel β entsprechend 185° bis 250° beträgt. Vorzugsweise wird der eine Teilungswinkel α mit 165° und der andere Teilungswinkel β mit 195° gewählt.

Die erste Span-Nut 7 wird durch eine mit der Schneide 4 verbundene Linie oder Kante 9 und die zweite Span-Nut 7' durch eine mit der Schneide 3 verbundene Linie oder Kante 9' begrenzt.

Bei einer bevorzugten Ausführungsform ist der eine Bohrersteg 2 gegenüber dem anderen Bohrersteg 1 verbreitert ausgebildet und durch die Zuordnung der zweiten Führungsfase 11 am Bohrersteg 2 erhält der Spiralbohrer eine Dreipunktführung.

Durch eine Ausspitzung der Querschneide 8 entsprechend der DIN-Vorschrift 1412 nach Form A,B,C oder D wird die auftretende Axialkraft wesentlich verringert.

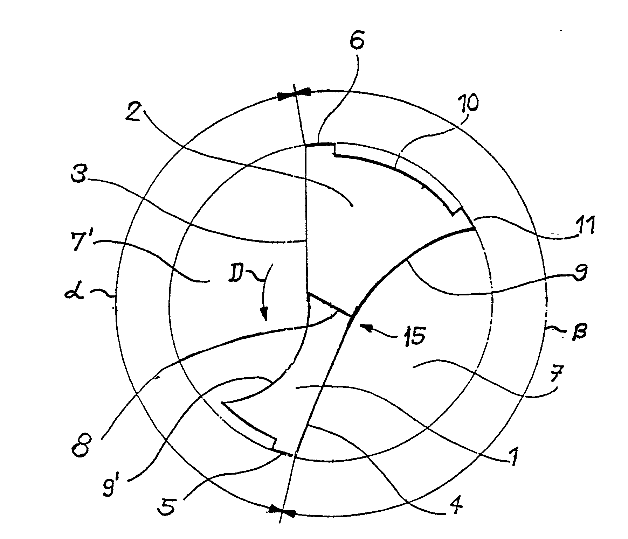

## Patentansprüche

1. Zweischneidig ausgebildeter Spiralbohrer, welcher zwei diametral zueinander angeordnete und durch einen Bohrerkern voneinander getrennte Span-Nuten (7,7') sowie zwei mit dem Bohrerkern (15) in Umfangsrichtung im Abstand zueinander angeordnete Schneiden (3,4) und mindestens eine entsprechend angeordnete Führungsfase aufweist, wobei der Bohrerkern (15) in bezug zu der als querschneide (8) ausgebildeten Bohrerspitze in einen mit der ersten Schneide (4) und einer ersten Führungsfase (5) versehenen ersten Bohrersteg (1) sowie in einen mit der zweiten Schneide (3) versehenen zweiten Bohrersteg (2) unterteilt ist, dadurch gekennzeichnet, dass der zweite Bohrersteg (2) in bezug zu dem ersten Bohrersteg (1) im Querschnitt verstärkt ausgebildet und mit zwei im Abstand zueinander angeordnete Führungsfasen (6,11) versehen ist, dass die beiden Bohrerstege (1,2) derart am Umfang versetzt zueinander angeordnet sind, dass der in Drehrichtung (D) zwischen der ersten Schneide (3) und der zweiten Schneide (4) vorgesehene erste Teilungswinkel (β) grösser als der ergänzende und zwischen 110° und 175° liegende zweite Teilungswinkel (α) ausgebildet ist.

2. Spiralbohrer nach Anspruch 1, dadurch gekennzeichnet, dass zwischen den beiden Führungsfasen (6,11) des im Querschnitt verstärkt ausgebildeten zweiten Bohrersteges (2) eine Freifläche (10) angeordnet ist.

3. Spiralbohrer nach Anspruch 1, dadurch gekennzeichnet, dass die der ersten Schneide (4) zugeordnete Führungsfase (5) sowie die beiden der zweiten Schneide (3) zugeordneten Führungsfasen (6,11) als eine dreipunktartige Führung ausgebildet und auf einer dem Bohrloch entsprechenden Zylinderfläche angeordnet sind.

## Revendications

1. Foret hélicoïdal à deux tranchants comprenant deux rainures à copeaux (7, 7') placées de façon diamétrale l'une par rapport à l'autre et séparées l'une de l'autre par un noyau de foret, ainsi que deux tranchants (3, 4) disposés en écartement dans le sens périphérique par rapport au noyau de foret, ainsi qu'une lèvre d'alésoir placée de façon correspondante, le noyau de foret (15), par rapport à la mèche réalisée en tant qu'arête transversale (8) étant divisé en une première dent de foret (1) munie du premier tranchant (4) et d'une première lèvre d'alésoir (5) ainsi qu'en une seconde dent de foret (2) munie du second tranchant (3), caractérisé en ce que la seconde dent de foret (2) présente une section renforcée par rapport à la première dent de foret (1) et comporte deux lèvres d'alésoir (6, 11) disposées en écartement l'une de l'autre, en ce que les deux dents de foret (1, 2) sont disposées, décalées sur le pourtour, de façon que le premier pas angulaire (β) prévu entre le premier tranchant (3) et le second tranchant (4) est plus grand que le second pas angulaire complémentaire (α), qui se trouve entere 110° et 175°.

2. Foret hélicoïdal suivant la revendication 1, caractérisé en ce qu'une surface libre (10) est prévue entre les deux lèvres d'alésoir (6, 11) de la seconde dent de foret (2) à section transversale renforcée.

3. Foret hélicoïdal suivant la revendication 1, caractérisé en ce que la lèvre d'alésoir (5) associée au premier tranchant (4) ainsi que les deux lèvres d'alésoir (6, 11) associées au second tranchant (3) sont réalisées en tant que guidage à trois points et sont prévues sur une surface cylindrique correspondant au trou de forage.

## Claims

1. A double-cutting twist drill, having two clearance grooves (7, 7'), separated from one another by a drill core, and arranged diametrically [opposed] to one another, as well as two cutters (3, 4), arranged spaced from one another in the circumferential direction with the drill core (15), and at least one correspondingly arranged drill heel, wherein the drill core (15) is divided, relative to the drill bit formed as a chisel edge (8), into a first drill web (1), provided with the first cutter (4) and a first drill heel (5), and into a second drill web (2), provided with the second cutter (3), characterised in that the second drill web (2) is formed such that it is reinforced in cross-section, relative to the first drill web (1), and is provided with two drill heels (6, 11), arranged spaced from one another, in that the two drill webs (1, 2) are arranged on the periphery, offset relative to one another, such that the first pitch angle (β) provided between the first cutter (3) and the second cutter (4) is greater than the supplementary second pitch angle (α), lying between 110° and 175°.

2. A twist drill according to claim 1, characterised in that arranged between both drill heels (6, 11) of the second drill web (2) formed such that it is reinforced in cross-section, there is a free space (10).

3. A twist drill according to claim 1, characterised in that the drill heel (5), allocated to the first cutter (4), as well as the two drill heels (6, 11), allocated to the second cutter (3), are formed as a three-point-type guide and arranged on a cylindrical face corresponding to the drill hole.